# EUROPEAN PATENT SPECIFICATION

(11) **EP 0 403 107 B1**
(45) Date of publication and mention of the grant of the patent: **27.10.1993**
(21) Application number: 90305835.2
(22) Date of filing: 29.05.1990
(51) Int. Cl.: F16C 11/06

(54) **Ball joint**
Kugelgelenk
Joint à rotule

(30) Priority: 15.06.1989 JP 69885/89
(43) Date of publication of application: 19.12.1990
(73) Proprietor: KABUSHIKI KAISHA SOMIC ISHIKAWA, Sumida-ku Tokyo (JP)
(72) Inventor: Suzuki, Keiichiro, c/o Ishikawa Tekko K.K., Hamamatsu-shi, Shizuoka-ken (JP); Suzuki, Kazumasa, c/o Ishikawa Tekko K.K., Hamamatsu-shi, Shizuoka-ken (JP); Yamada, Masahiro, c/o Ishikawa Tekko K.K., Hamamatsu-shi, Shizuoka-ken (JP)
(74) Representative: Ben-Nathan, Laurence Albert

(56) References cited:
- EP-A- 0 241 741
- DE-A- 3 843 331

## Description

The present invention relates to a ball joint having a dust cover thereon.

### Description of the Prior Art

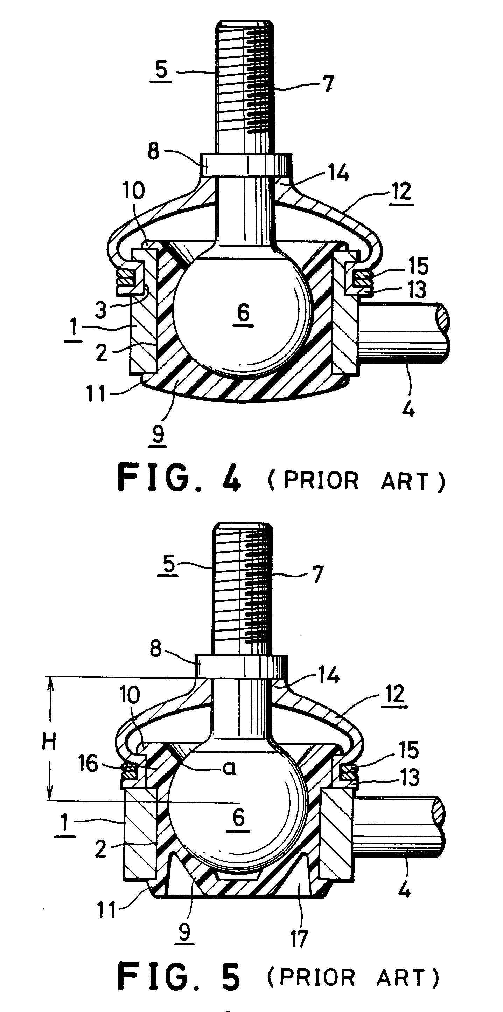

A ball joint shown in Fig. 4 is a known example of conventional ball joints.

In Fig. 4, numeral 1 denotes a socket made of steel or other metal. Socket 1 has a cylindrical through hole 2 formed therein and open at both ends. A recessed groove 3 is formed about the outer surface at one end of socket 1. A shank 4 is integrally affixed to the outer surface of socket 1.

Numeral 5 denotes a ball stud made of steel or other metal having a ball portion 6 integrally formed with a shank portion 7. A stopper 8 is disport at middle part of shank portion 7. The diameter of stopper 8 is larger than the diameter of shank portion 7.

Number 9 denotes a ball seat made of a hard thermoplastic resin with a cylindrical outer surface fitted into socket 1. Ball seat 9 is open at one end and has flanges 10 and 11 formed on the outer surfaces of its opposed ends.

Numeral 12 denotes a cylindrical dust cover made of synthetic rubber. An attaching part 13 is disposed at one end of dust cover 12 to lock into the recessed groove 3 of socket 1. A slip 14 is formed at the other end of the dust cover to slidably attach dust cover 12 around the outer surface of shank portion 7 of ball stud 5.

Ball portion 6 of ball stud 5 is inserted, together with ball seat 9 positioned therearound, into through hole 2 of socket 1 with or without pressure. Ball portion 6 of ball stud 5 is slidably supported in ball seat 9. Shank portion 7 of ball stud 5 protruds from ball seat 9. Flanges 10 and 11 at the ends of ball seat 9 lock over their respective ends of socket 1. Dust cover 12 is positioned to face the opening at one end of socket 1. An attaching part 13 of dust cover 12 is clamped into recessed groove 3 of socket 1 by a ring-shaped metal clip 15. Slip 14 is attached around shank 7 of ball stud 5 below stopper 8. When thus installed, dust cover 12 covers the opening of ball seat 9.

A ball joint of this type, with dust cover 12 excludeds dirt and muddy water in order to improve the life of the ball joint. However, this conventional ball joint presents a problem in that when load is applied at right angles to ball stud 5, there is a chance that a slight space may be formed between socket 1 and flange 11, thus permitting dirt and/or muddy water to enter the space between socket 1 and flange 11 and migrate along the surface of through hole 2 and into ball seat 9, where it can cause wear.

A ball joint shown in Fig. 5 is also a widely known example of conventional ball joints.

Unlike the above example shown in Fig. 4, instead of providing socket 1 with recessed groove 3 a thick catching receiver 16 is disposed at one end of ball seat 9. A flange 10 abuts one end of socket 1. A locking attaching part 13 of dust cover 12 is clamped into flange 10 by a metal clip 15. A recess 17 around the outer surface of the lower part of ball seat 9 provides relief to permit the ball seat 9 to be easily inserted into through hole 2.

With this ball joint, part "a", where the diameter of the opening of ball seat 9 is smallest, is located beyond the end of socket 1, thus causing the drawing strength of ball stud 5 from socket 1 to be reduced. In order to improve the drawing strength of ball stud 5, it is necessary to position the smallest diameter part "a" of the opening of ball seat 9 as close as possible to the end of socket 1. However, doing this requires making socket 1 and ball stud 5 longer in the direction of the shank 7 and thereby increasing the fitting length H of ball stud 5. This is disadvantageous because the strength of ball stud 5 may suffer and the size of the entire ball joint is increased.

As described above, the conventional technique for fitting a dust cover on a ball joint has problems in its ability to seal the ball joint and in the drawing strength of the ball stud.

EP-A-0,241,741 discloses a ball joint having the features of the preamble of Claim 1.

A major object of the present invention is to provide a ball joint with improved drawing strength of its ball stud from the socket, while maintaining satisfactory sealing with the dust cover.

The invention provides a ball joint according to Claim 1.

The above, and other objects , features and advantages of the present invention will become apparent from the following description read in conjunction with the accompanying drawings, in which like reference numerals designate the same elements.

### BRIEF DESCRIPTION OF THE DRAWINGS

Figure 1 is a longitudinal cross section of an embodiment of a ball joint according to the present invention;
Figure 2 is a curve of the drawing load of the ball joint of Figure 1;
Figure 3 is a longitudinal cross section of another embodiment of a ball joint according to the present invention;
Figures 4 and 5 are cross sections showing examples of conventional ball joints according to the prior art.

### DETAILED DESCRIPTION OF THE PREFERRED EMBODIMENTS

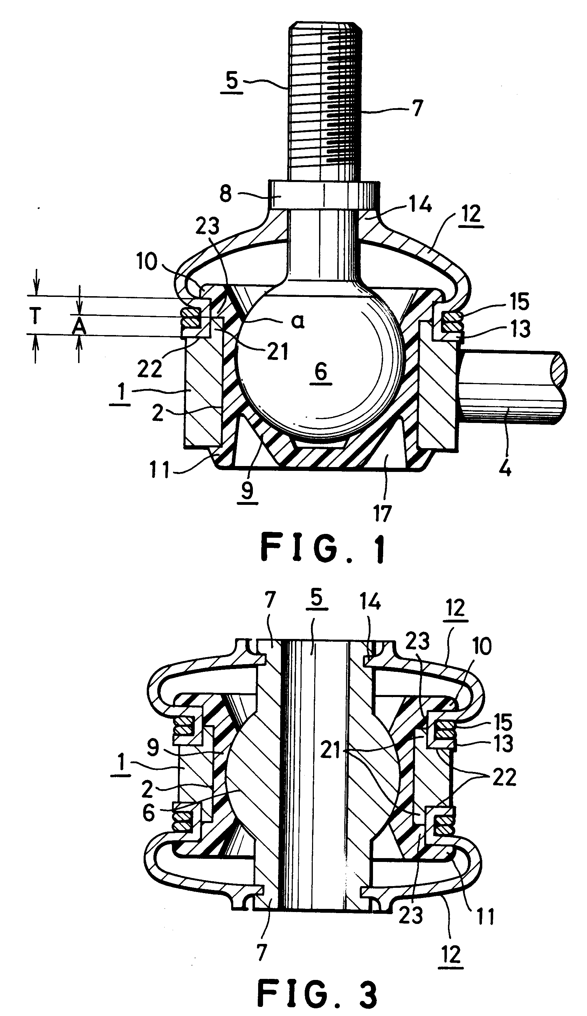

A detailed description of an embodiment of the present invention is given hereunder referring to Figure 1:

A ball joint in Fig. 1 is similar to those explained above with reference to Figs. 4 and 5, except for the manner of attaching the dust cover. Thus, parts corresponding to those of Figs. 4 and 5 are given the same reference numerals in the following deseription.

A ball joint of the present embodiment of the invention includes a socket 1 made of steel or other metal having a cylindrical through hole 2 that opens at both ends of the socket 1. A shank 4 is integrally affixed to the exterior of socket 1. A ball stud 5, made of steel or other metal, includes a ball portion 6, a shank portion 7 and a stopper 8. The diameter of stopper 8 is larger than the diameter of shank portion 7. A ball seat 9, made of hard thermoplastic resin, includes a cylindrical outer surface and an opening at one end. Flanges 10 and 11 are disposed at opposed ends of an outer surface of ball seat 9. A recess 17 is formed in the outer surface of the bottom of ball seat 9. A cylindrical dust cover 12, made of synthetic rubber includes an attaching part 13 forming one end of said dust cover 12. A slip 14 forms the other end of the dust cover. A clip 15 engages attaching part 13, as will be explained.

To assemble the ball joint of Figure 1, ball portion 6 of ball stud 5 is inserted into ball seat 9. Ball seat 9 is fitted into through hole 2 of socket 1 with or without pressure. Ball portion 6 of ball stud 5 is thus slidably supported with shank portion 7 protruding from ball seat 9. Flanges 10 and 11 at opposed ends of ball seat 9 face the respective ends of socket 1. Dust cover 12 is positioned to face the open end of socket 1, with its attaching part 13 lockingly fitted to the side of socket 1 and clamped by clip 15 and with its slip 14 fitted on shank 7 below stopper 8 so that the opening of ball seat 9 is covered by dust cover 12.

Where dust cover 12 is attached to socket 1, a cylindrical wall 21 extends from socket 1. The inner diameter of the cylindrical wall 21 is identical to that of through hole 2. The outer diameter of wall 21 is smaller than the outer diameter of socket 1, thus forming a recessed part 22 around one end of the outer surface of socket 1. A receiving part 23 of ball seat 9 below flange 10 has an outer surface having the same diameter as the outer surface of the recessed part 22 of one end of socket 1. Thus, a recess to receive attaching part 13 of dust cover 12 is formed by recessed part 22 of socket 1 and receiving part 23 of ball seat 9. The outer diameter of the formed recess being smaller than the outer diameter of socket 1 so that attaching part 13 of dust cover 12 is lockingly fitted and fixed by clamping around the outer surfaces of recessed part 22 and receiving part 23.

A height A of wall 21 (also recessed part 22 of socket 1) is set in the range of 1/4 to 3/4 of a height T of attaching part 13 of dust cover 12. For example, height A may be 1/2 of height T. Accordingly, the height of receiving part 23 of ball seat 9 is T minus A.

As described above, recessed part 22 is formed by wall 21 extending from an end of socket 1. Attaching part 13 of dust cover 12 fits the vertical distance from recessed part 22 to receiving part 23. Therefore, the smallest diameter part "a" of the opening of ball seat 9 can be positioned close to the end of socket 1, even within wall part 21, thereby limiting the required aperture of smallest diameter part "a" of the opening of ball seat 9 and increasing the drawing load. In addition, by setting the height A of recessed part 22 of socket A within the range from 1/4 to 3/4 of height T of attaching part 13 of dust cover 12, it is possible to select the best position of smallest diameter part "a" of the opening of ball seat 9 and its sealing ability.

Furthermore, as attaching part 13 of dust cover 12 abuts the outer surface of ball seat 9, the clamping effectiveness of clip 15 is improved, and improved sealing is therefore obtained.

With a conventional ball joint having a ball portion 6 of ball stud 5 with a diameter of 20 mm and a ball seat 9 made of polyacetyl resin, the resulting drawing strength is normally approx. 130 kg. A ball joint according to the present invention, however, provides a maximum drawing strength of 280 kg.

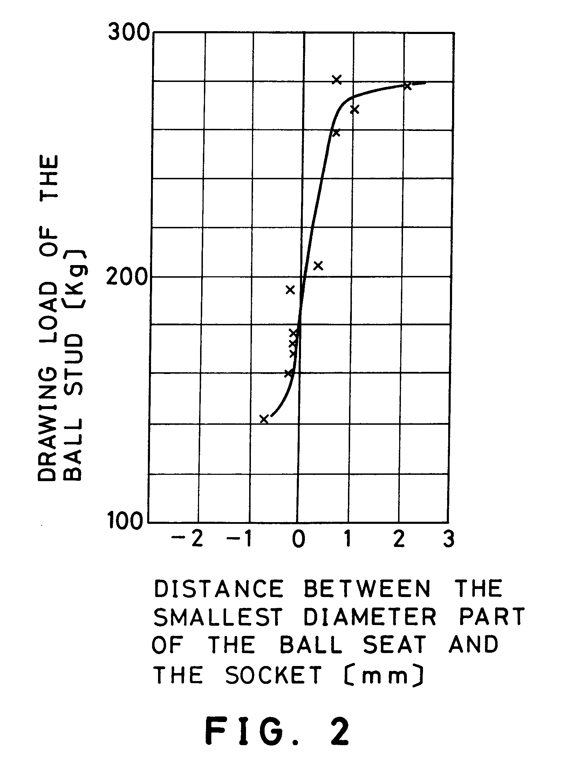

Referring now to Fig. 2, data is presented chaining actual measurements of the relationship between the distance between the smallest diameter part and socket 1, and the drawing strength of ball stud 5. It will be noted that the drawing strength changes by a factor of about two over a distance of about 1 mm.

Referring now to Figure 3, another embodiment of the present invention employs a ball stud 5 having a ball portion 6 with cylindrical shank portions 7 protruding from both ends of ball portion 6. A ball seat 9 is open at both ends. A dust cover 12 is attached between each shank portion 7 and its respective end of socket 1, thereby covering both openings of ball seat 9 with dust covers 12. In the same manner, the present invention is applicable to a ball joint wherein the shank is inserted through the center of ball stud 5.

According to the present invention, it is possible to position the smallest diameter part of the opening of the ball seat 9 close to or within the end of the socket 1, by forming a recessed part 22 around the outer surface of the end of the socket 1 and fitting the attaching part 13 of the dust cover 12 in the area from the recessed part 22 to the receiving part 23 of the ball seat 9. Therefore, the present invention makes it posssible to limit the required aperture of the smallest diameter part of the opening of the ball seat 9 and thereby to maintain a large drawing load.

In addition, as the attaching part 13 of the dust cover 12 abuts the outer surface of the ball seat 9, clamping and sealing are both improved.

By setting the height of the recessed part 22 of the socket 1 within the range of from 1/4 to 3/4 of the height of the attaching part 13 of the dust cover 12, it is possible to select the best position of the smallest diameter part a of the opening of the ball seat as well as to improve the sealing.

Having described preferred embodiments of the invention with reference to the accompanying drawings, it is to be understood that the invention is not limited to those precise embodiments, and that various changes and modifications may be effected therein by one skilled in the art without departing from the scope of the appended claims.

## Claims

1. A ball joint comprising:
a socket (1);
a cylindrical through hole (2) in said socket (1);
a ball seat (9) in said through hole (2);
a ball stud (5) with a ball portion (6) slidably supported in said socket (1);
at least one shank portion (7) of said ball stud (5) protruding from said through hole (2) in at least one direction;
at least one dust cover (12) positioned to cover the opening of the ball seat (9);
a separate locking part (15) for attaching said dust cover (12) to said socket (1);
a recessed part (22) around an outer surface at an end of said socket (1), the recessed part (22) being formed by recessing the outer peripheral brim of said socket (1);
an attaching part (13) of said dust cover (12) forming one end thereof; and,
said attaching part (13) being clamped around surfaces of said recessed part (22),
characterized by
a receiving part (23) on an outer surface near an end of said ball seat (9);
an outer surface of said receiving part (23) being disposed at a level with that of said recessed part (22);
said attaching part (13) being clamped around said recessed part (22) and said receiving part (23);
the ball seat (9) including flanges (10,11) at its opposed ends facing the respective ends of socket (1); and
the receiving part (23) of the ball seat (9) having an outer peripheral surface with the same diameter as the outer peripheral surface of the recessed part (22) of the socket (1) and being located below at least one of the flanges (10,11) to form, together with recessed part (22), a common recess which receives the attaching part (13) of the dust cover (12).

2. A ball joint according to claim 1, wherein the height of said recessed part (22) is in the range of from 1/4 to 3/4 of the height of said attaching portion (13).

3. A ball joint according to claim 1 wherein said ball seat (9) is a hard synthetic resin.

4. A ball joint according to claim 3 wherein said hard synthetic resin is polyacetyl resin.

5. A ball joint according to claim 1, wherein said at least one shank portion (7) includes first and second shank portions (7) ;
said first shank portion (7) protruding in a first direction from said through hole (2);
said second shank portion (7) protruding from said through hole (2) in a second direction opposite to said first direction;
said at least one dust cover (12) including first and second dust covers (12) ;
said first durst cover (12) including a first attaching part (13) clamped at a first end of said socket (1), and a second attaching part (13) clamped at a second end of said socket (1), whereby said ball seat (9) is clamped at both ends thereof to resist transverse displacement.

## Patentansprüche

1. Ein Kugelgelenk, welches umfaßt:
einen Sockel (1);
ein im Sockel (1) angeordnetes zylindrisches Durchgangsloch (2);
einen im Durchgangsloch (2) angeordneten Kugelsitz (9);
einen Kugelbolzen (5) mit einem Kugelabschnitt (6), der gleitend im Sockel (1) gelagert ist;
wenigstens einen Schaftabschnitt (7) des Kugelbolzens (5), der in wenigstens einer Richtung aus dem Durchgangsloch (2) hervorsteht;
wenigstens eine Schmutzabdeckung (12), die zum Abdecken der Öffnung des Kugelsitzes (9) angeordnet ist;
ein separates Verschlußteil (15) zum Befestigen der Schmutzabdeckung (12) am Sockel (1);
einen um eine äußere Oberfläche an einem Ende des Sockels (1) ausgesparten Abschnitt (22), der durch Aussparen des äußeren Umfangrands des Sockels (1) gebildet wird;
einen Befestigungsabschnitt (13) der Schmutzabdeckung (12), der an einem seiner Enden ausgebildet ist; und, den Befestigungsabschnitt (13), der um die Fläche des ausgesparten Abschnitts (22) festgeklemmt ist,
**gekennzeichnet durch**
einen auf einer äußeren Fläche in der Nähe eines Endes des Kugelsitzes (9) angeordneten Aufnahmeabschnitts (23);
eine äußere Fläche des Aufnahmeabschnitts (23), die auf einer Ebene mit der des Aufnahmeabschnitts (22) angeordnet ist;
den Befestigungsabschnitt (13), der um den ausgesparten Abschnitt (22) und den Aufnahmeabschnitt (23) herum festgeklemmt ist;
den Kugelsitz (9), der an seinen entgegengesetzten Enden Flansche (10, 11) hat, die den entsprechenden Enden des Sockels (1) gegenüberliegen; und
den Aufnahmeabschnitt (23) des Kugelsitzes (9), der eine äußere Umfangsfläche mit den gleichen Durchmesser hat, wie die äußere Umfangsfläche des ausgesparten Abschnitts (22) des Sockels (1), und der unterhalb an zumindest einem der Flansche (10, 11) angeordnet ist, um zusammen mit den ausgesparten Abschnitt (22) eine gemeinsame Aussparung zu bilden, die den Aufnahmeabschnitt (13) der Schmutzabdeckung (12) aufnimmt.

2. Kugelgelenk nach Anspruch 1, dadurch gekennzeichnet, daß die Größe des ausgesparten Abschnitts (22) im Bereich zwischen 1/4 bis 3/4 der Größe des Befestigungsabschnitts (13) liegt.

3. Kugelgelenk nach Anspruch 1, dadurch gekennzeichnet, daß der Kugelsitz (9) aus einem harten synthetischen Kunststoff besteht.

4. Kugelgelenk nach Anspruch 3, dadurch gekennzeichnet, daß der harte synthetische Kunststoff ein Polyacetyl-Harz ist.

5. Kugelgelenk nach Anspruch 1, dadurch gekennzeichnet, daß der wenigstens eine Schaftabschnitt (7) einen ersten und einen zweiten Schaftabschnitt (7) einschließt;
der erste Schaftabschnitt (7) in einer ersten Richtung aus dem Durchgangsloch (2) hervorsteht;
der zweite Schaftabschnitt (7) in einer zweiten der ersten Richtung entgegengesetzten Richtung aus dem Durchgangsloch (2) hervorsteht;
die wenigstens eine Schmutzabdeckung (12) eine erste und eine zweite Schmutzabdeckung (12) einschließt;
die erste Schmutzabdeckung (12) einen erste an einem ersten Ende des Sockels (1) festgeklemmten Befestigungsabschnitt (13), und
einen an einem zweiten Ende des Sockels (1) festgeklemmten Befestigungsabschnitt (13) einschließt, wobei der Kugelsitz (9) an seinen beiden Enden festgeklemmt ist, um diagonalem Versatz standzuhalten.

## Revendications

1. Rotule comportant :
une douille (1);
un trou de passage cylindrique (2) à travers ladite douille (1);
un siège de rotule (9) dans ledit trou de passage (2);
une queue de rotule (5) avec une partie rotule (6) supportée à coulissement dans ladite douille (1);
au moins une partie tige (7) de ladite queue de rotule (5) faisant saillie hors dudit trou de passage (2) dans au moins une direction;
au moins un soufflet antipoussière (12) positionné de manière à couvrir l'ouverture du siège de rotule (9);
une pièce de verrouillage séparée (15) pour attacher ledit soufflet antipoussière (12) à ladite douille (1);
une pièce renfoncée (22) autour d'une surface externe à une extrémité de ladite douille (1), la pièce renfoncée (22) étant formée en enfonçant le bord périphérique externe de ladite douille (1);
une pièce d'attache (13) dudit soufflet antipoussière (12) formant une extrémité de ce dernier; et
ladite pièce d'attache (13) étant serrée autour des surfaces de ladite pièce renfoncée (22),
caractérisée par
une pièce de réception (23) sur une surface externe près d'une extrémité dudit siège de rotule (9);
une surface externe de ladite pièce de réception (23) étant disposée au même niveau que celle de ladite pièce renfoncée (22);
ladite pièce d'attache (13) étant serrée autour de ladite pièce renfoncée (22) et de ladite pièce de réception (23);
le siège de rotule (9) comprenant des brides (10, 11) à ses extrémités opposées face aux extrémités respectives de la douille (1); et
la pièce de réception (23) du siège de rotule (9) ayant une surface périphérique externe de même diamètre que la surface périphérique externe de la pièce renfoncée (22) de la douille (1) et étant située sous au moins une des brides (10, 11) pour former, avec la pièce renfoncée (22), un renfoncement commun pour recevoir la pièce d'attache (13) du soufflet antipoussière (12).

2. Rotule selon la revendication 1, caractérisée en ce que la hauteur de ladite pièce renfoncée (22) est de l'ordre de 1/4 à 3/4 de la hauteur de ladite pièce d'attache (13).

3. Rotule selon la revendication 1, caractérisée en ce que ledit siège de rotule (9) est une résine synthétique dure.

4. Rotule selon la revendication 3, caractérisée en ce que ladite résine synthétique dure est de la résine polyacétal.

5. Rotule selon la revendication 1, caractérisée en ce que ladite au moins une partie de tige (7) comprend des première et deuxième parties de tige (7);
ladite première partie de tige (7) faisant saillie dans une première direction hors dudit trou de passage (2);
ladite deuxième partie de tige (7) faisant saillie hors dudit trou de passage (2) dans une deuxième direction opposée à ladite première direction;
ledit au moins un soufflet antipoussière (12) comprenant des premier et deuxième soufflets antipoussière (12);
ledit premier soufflet antipoussière (12) comprenant une première pièce d'attache (13) serrée à une première extrémité de ladite douille (1) et une deuxième pièce d'attache (13) serrée à une deuxième extrémité de ladite douille (1), ledit siège de rotule (9) étant serré à ses deux extrémités pour résister aux efforts de déplacement transversal.
